# FASCICULE DE BREVET EUROPEEN

(11) **EP 0 622 152 B1**
(45) Date de publication et mention de la délivrance du brevet: **25.06.1997**
(21) Numéro de dépôt: 94400755.8
(22) Date de dépôt: 06.04.1994
(51) Int. Cl.: B23K 37/047, B23K 26/08, B23Q 3/06

(54) **Installation de positionnement bord à bord et de soudage au moyen d'un faisceau laser d'au moins deux flans de tôle**
Bearbeitungsstation mit Stümpfpositionierung und Laserstrahlschweissen von zwei Blechkanten
Edge-to-edge positioning and laser welding device for metal plates

(30) Priorité: 28.04.1993 FR 9305043
(43) Date de publication de la demande: 02.11.1994
(73) Titulaire: SOLLAC, F-92800 Puteaux (FR)
(72) Inventeur: Peru, Gilles, F-59240 Dunkerque (FR); Sauvage, Francis, F-59240 Dunkerque (FR); Le Roy, Yvon, F-59940 Le Doulieu (FR); Sion, Charles, F-59133 Camphin-en-Carembault (FR)
(74) Mandataire: Lanceplaine, Jean-Claude

(56) Documents cités:
- EP-A- 0 483 652
- DE-A- 3 409 178
- US-A- 2 705 514
- US-A- 4 841 907

## Description

La présente invention a pour objet une installation de positionnement bord à bord et de soudage au moyen d'un faisceau laser d'au moins deux flans de tôle.

Le soudage au moyen d'un faisceau laser d'au moins deux flans de tôle a trouvé un débouché industriel important notamment dans la production de pièces raboutées et soudées, par exemple pour l'industrie automobile.

En effet, les flans de tôles raboutés, c'est à dire assemblés bord à bord sans recouvrement, et soudés au moyen d'un faisceau laser conservent toute leur faculté d'emboutissabilité.

Les flans de tôle peuvent être de différentes formes géométriques et/ou de différentes épaisseurs, voire posséder des nuances d'acier différentes.

Pour réaliser un raboutage et un soudage corrects au moyen d'un faisceau laser de deux flans de tôle afin que la capacité d'emboutissage des flans de tôle soudés reste optimale, il est nécessaire que les flans de tôle à souder soient disposés avec leurs bords l'un contre l'autre sans interstices et dans le cas de flans de tôle de différentes formes, il faut que leur positionnement longitudinal l'un par rapport à l'autre soit parfait.

De plus, il est indispensable d'assurer, d'une part, un positionnement latéral parfait des flans de tôle afin que le plan de joint des deux flans de tôle se situe dans l'axe du faisceau laser et, d'autre part, un maintien en référence longitudinal et latéral desdits flans de tôle pendant leur déplacement pour conserver le plan de joint dans l'axe du faisceau laser.

Par ailleurs, le soudage bord à bord d'au moins deux flans de tôle au moyen d'un faisceau laser demande de très hautes exigences de précision, de forme et de position desdits flans de tôle à souder.

En effet, la qualité du joint à souder dépend en partie de la précision dans la position des flans de tôle et dans la qualité du contact au niveau du plan de joint entre lesdits flans de tôle.

Si la qualité du contact au niveau du plan de joint est incorrecte, c'est à dire si le jeu est trop important, il arrive que le joint soudé présente un effondrement, voire même des trous, le joint soudé n'étant pas continu dans ce cas.

Pour assurer un jeu minimal au niveau du plan de joint des flans de tôle afin d'obtenir une bonne qualité du joint soudé, on peut améliorer la qualité du cisaillage des tôles afin de limiter les ondulations des arêtes de coupe et d'assurer un meilleur contact des flans de tôle entre eux pour mieux maîtriser ce jeu entre lesdits flans de tôle.

Mais, pour obtenir un tel résultat, il est nécessaire d'investir dans des cisailles très précises de coût important ou d'utiliser des cisailles doubles permettant de couper simultanément avec la même lame, les deux flans de tôle à rabouter.

On peut également exercer une pression latérale sur les flans de tôle, dirigée vers le plan de joint desdits flans de tôle afin d'écraser les crêtes des ondulations des arêtes de coupe des bords à souder.

Cette dernière solution est de plus en plus utilisée dans les installations industrielles de soudage au moyen d'un faisceau laser.

A cet effet, on connaît des installations industrielles, dites continues, qui permettent la réception des flans de tôle, le positionnement desdits flans de tôle l'un par rapport à l'autre et par rapport à l'axe du faisceau laser, et cela pendant leur déplacement en direction dudit faisceau laser, puis qui permettent de conserver cette mise en référence pendant leur déplacement et d'assurer le soudage des flans de tôle et leur évacuation.

Dans le cas où il est nécessaire d'avoir une pression latérale différente selon le point où l'on exerce ladite pression, par exemple dans le cas de flans de tôle raboutés présentant des évidements ou des découpes ou dans le cas où l'on raboute deux flans de tôle d'épaisseur ou de nature différente à un troisième, l'utilisation d'une installation continue s'avère délicate car il est alors nécessaire d'asservir la mise en pression de chaque organe de mise en pression selon la position des flans de tôle dans l'installation.

Une telle opération nécessite un asservissement très précis et une mise en oeuvre compliquée.

Pour réaliser de telles opérations de soudage, on connaît des installations industrielles, dites statiques, dans lesquelles les flans de tôle positionnés bord à bord sont fixes et l'ensemble de soudage est mobile le long du plan de joint à souder desdits flans de tôle, voir par exemple US-A-4 854 493.

D'une manière générale, ces installations comportent des dispositifs de maintien des flans de tôles qui utilisent pour chaque flan de tôle des systèmes de bridage vertical constitués par exemple par des mors de serrage monolithiques.

Mais, ces systèmes de bridage ont pour inconvénient de dégrader les surfaces des flans de tôle et d'exercer une pression uniforme sur lesdits flans de tôle.

Ainsi, dans le cas du soudage de plusieurs flans de tôle de différentes épaisseurs, la pression exercée par les systèmes de bridage étant uniforme, la qualité du joint soudé est généralement mauvaise.

De plus, ces systèmes de bridage ne comportent pas de moyens de régulation de la pression en fonction de la longueur à souder si bien qu'il n'est pas possible d'appliquer la pression désirée.

L'invention a donc pour but de proposer une installation de positionnement bord à bord et de soudage au moyen d'un faisceau laser d'au moins deux flans de tôle permettant d'obtenir une bonne qualité de soudure et d'exercer sur lesdits flans de tôle une pression latérale de contact adaptée aux paramètres des flans de tôle à souder et à la préparation des bords à souder desdits flans de tôle.

L'invention a donc pour objet une installation de positionnement bord à bord et de soudage au moyen d'un faisceau laser d'au moins deux flans de tôle, comprenant :
- des moyens de support et de positionnement d'un premier flan de tôle selon un plan de référence horizontal,
- des moyens de positionnement du bord à souder dudit premier flan de tôle dans l'axe du faisceau laser,
- des moyens de maintien du bord à souder du premier flan de tôle dans l'axe du faisceau laser,
- des moyens de serrage du premier flan de tôle,
- des moyens de support et de positionnement d'au moins un second flan de tôle selon ledit plan de référence horizontal,
- des moyens de maintien du bord à souder dudit second flan de tôle contre le bord à souder dudit premier flan de tôle,
- des moyens de serrage dudit second flan de tôle,
- des moyens de mise en pression latérale des bords à souder dudit flan de tôle,
- et un ensemble de soudage par faisceau laser déplaçable selon le plan de joint desdits flans de tôle à souder,
   caractérisée en ce que
- les moyens de serrage dudit second flan de tôle et les moyens de mise en pression latérale des bords à souder desdits flans de tôle sont à pression sectorisée.

Selon d'autres caractéristiques de l'invention :
- les moyens de support et de positionnement du premier flan de tôle sont formés par au moins un patin inférieur fixe, en appui sur une table de support et s'étendant parallèlement au plan de joint desdits flans de tôle, ledit patin inférieur formant une surface de contact continu avec la face inférieure dudit premier flan de tôle,
- les moyens de positionnement du bord à souder du premier flan de tôle sont formés par une butée longitudinale et escamotable, disposée verticalement pour que le plan passant par sa face latérale située en regard du patin inférieur fixe, soit confondu avec l'axe du faisceau laser,
- les moyens de maintien du bord à souder du premier flan de tôle dans l'axe du faisceau laser sont formés par au moins un patin supérieur déplaçable verticalement et s'étendant parallèlement au plan de joint desdits flans de tôle, ledit patin supérieur formant une surface de contact continu avec la face supérieure dudit premier flan de tôle et étant disposé en regard dudit patin inférieur fixe,
- les moyens de serrage du premier flan de tôle sont formés par au moins un vérin destiné à exercer sur le patin supérieur une pression verticale pour serrer ledit premier flan de tôle entre ce patin supérieur et le patin inférieur,
- les moyens de support et de positionnement dudit second flan de tôle sont formés par une série de patins inférieurs indépendants, juxtaposés et s'étendant parallèlement au plan de joint desdits flans de tôle, lesdits patins inférieurs formant une surface de contact sensiblement continu avec la face inférieure dudit second flan de tôle et étant montés chacun déplaçable sur une table support, perpendiculairement au plan de joint desdits flans de tôle,
- les moyens de maintien du bord à souder dudit second flan de tôle contre le bord à souder dudit premier flan de tôle sont formés par une série de patins supérieurs indépendants, juxtaposés et s'étendant parallèlement au plan de joint desdits flans de tôle, lesdits patins supérieurs formant une surface de contact sensiblement continu avec la face supérieure dudit second flan de tôle et étant disposés chacun en regard d'un patin de ladite série de patins inférieurs,
- chaque patin de ladite série de patins supérieurs est déplaçable, d'une part, verticalement et, d'autre part, perpendiculairement au plan de joint desdits flans de tôle,
- les moyens de serrage à pression sectorisée dudit second flan de tôle sont formés par au moins un vérin associé à chaque patin de la série de patins supérieurs et destiné à exercer sur ledit patin une pression verticale pour serrer ledit second flan de tôle entre ce patin et le patin correspondant de la série de patins inférieurs,
- les moyens de mise en pression latérale et sectorisée des bords à souder desdits flans de tôle sont formés par au moins un vérin associé à chaque patin de la série de patins inférieurs et destiné à exercer sur ledit patin une pression dirigée selon une direction perpendiculaire au plan de joint desdits flans de tôle.

Les caractéristiques et avantages de l'invention apparaîtront au cours de la description qui va suivre, donnée uniquement à titre d'exemple, faite en référence aux dessins annexés, dans lesquels :

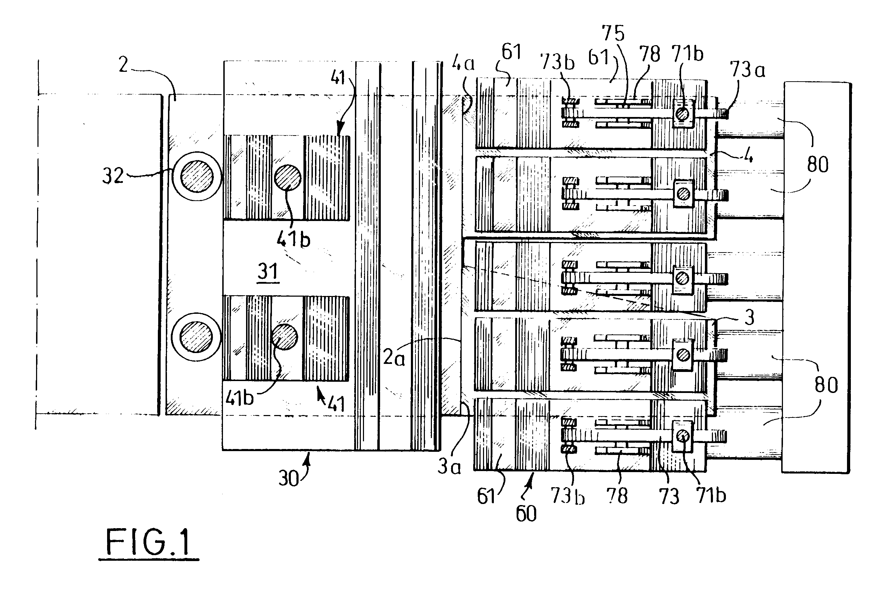

- la Fig. 1 est une vue schématique de dessus d'une installation selon la présente invention,
- la Fig. 2 est une vue schématique en coupe transversale de l'installation selon la présente invention, dans laquelle les moyens de serrage du second flan de tôle sont en position ouverte,
- la Fig. 3 est une vue schématique en coupe transversale de l'installation selon la présente invention, dans laquelle les moyens de serrage du second flan de tôle sont en position fermée.

L'installation représentée schématiquement sur les figures est destinée au positionnement bord à bord et au soudage au moyen d'un faisceau laser 1 d'au moins deux flans de tôle 2, 3 et 4 de différentes formes géométriques et/ou différentes épaisseurs, voire de différentes nuances d'acier, par exemple pour l'industrie automobile.

Dans l'exemple de réalisation décrit ci-après, l'installation selon l'invention est destinée au positionnement bord à bord et au soudage de trois flans de tôle 2, 3 et 4, les bords à souder 3a et 4a des flans de tôle 3 et 4 étant appliqués sur le bord à souder 2a du flan de tôle 1.

Dans ce but, l'installation représentée schématiquement sur les figures comprend :
- une table latérale 5 de support du flan de tôle 2,
- une table latérale 6 de support des flans de tôle 3 et 4,
- des moyens 10 de support et de positionnement du flan de tôle 2 selon un plan de référence horizontal,
- des moyens 20 de positionnement du bord à souder 2a du premier flan de tôle 2 dans l'axe du faisceau laser 1,
- des moyens 30 de maintien du bord à souder 2a du flan de tôle 2 dans l'axe du faisceau laser 1,
- des moyens 40 de serrage du flan de tôle 2,
- des moyens 50 de support et de positionnement des flans de tôle 3 et 4 selon ledit plan de référence horizontal,
- des moyens 60 de maintien des bords à souder 3a et 4a des flans de tôle 3 et 4 contre le bord à souder 2a du flan de tôle 2,
- des moyens 70 de serrage à pression sectorisée des flans de tôle 3 et 4,
- des moyens 80 de mise en pression latérale et sectorisée des bords à souder 2a, 3a et 4a des flans de tôle 2, 3 et 4,
- et un ensemble de soudage par faisceau laser 1 déplaçable selon le plan de joint des flans de tôle 2, 3 et 4 à souder.

Les moyens 10 de support et de positionnement du premier flan de tôle 2 sont formés par au moins un patin inférieur 11 fixe, en appui sur une table support 12 et s'étendant parallèlement au plan de joint des flans de tôle 2, 3 et 4.

Ce patin inférieur 11 forme une surface de contact continu avec la face inférieure du flan de tôle 2.

Le patin inférieur 11 est en appui par sa face latérale 11a opposée à celle 11b en regard du plan de joint des flans de tôle 2, 3 et 4, sur au moins un organe de butée 13 solidaire de la table support 12 et constitué par exemple par des galets.

Cet organe de butée 13 permet d'éviter le glissement du patin inférieur 11 selon une direction perpendiculaire au plan de joint des flans de tôle 2, 3 et 4 lorsqu'une pression latérale est exercée sur lesdits flans de tôle 2, 3 et 4, comme on le verra ultérieurement.

Les moyens 20 de positionnement du bord à souder 2a du flan de tôle 2 sont formés par une butée 21 longitudinale et escamotable.

A cet effet, la butée 21 est reliée à un mécanisme à excentrique 22 et est disposée verticalement pour que le plan de joint passant par sa face latérale 21a située en regard du patin inférieur 11, soit confondue avec l'axe du faisceau laser 1.

Le mécanisme à excentrique 22 peut être remplacé par des vérins à double effet actionnant directement les butées 21 guidées dans des guidages verticaux.

Les moyens 30 du maintien du bord à souder 2a du flan de tôle 2 dans l'axe du faisceau laser 1 sont formés par au moins un patin supérieur 31 déplaçable verticalement et s'étendant parallèlement au plan de joint des flans de tôle 2, 3 et 4.

Ce patin supérieur 31 forme une surface de contact continu avec la face supérieure du flan de tôle 2 et est disposé en regard du patin inférieur 11.

Le patin inférieur 11 et le patin supérieur 31 peuvent être remplacés par plusieurs patins juxtaposés formant des surfaces de contact sensiblement continu avec le flan de tôle 2.

Les moyens 40 de serrage du premier flan de tôle 2 sont formés par au moins un vérin 41 destiné à exercer sur le patin supérieur 31 une pression verticale pour serrer le flan de tôle 2 entre ce patin supérieur 31 et le patin inférieur 11.

Le vérin 41 comporte un corps 41a supporté par une poutre 42 s'étendant parallèlement au patin supérieur 31 et une tige 41b déplaçable verticalement et solidaire du patin supérieur 31.

Le patin supérieur 31 est en appui par sa face latérale 31a opposée à celle 31b en regard du plan de joint des flans de tôle 2, 3 et 4, sur au moins un organe de butée 32 solidaire de la poutre 42 et constitué par exemple par des galets.

Cet organe de butée 32 évite le glissement du patin supérieur 31 lorsqu'une pression latérale est exercée sur les flans de tôle 2, 3 et 4.

L'ensemble constitué par la poutre 42, le vérin 41, le patin supérieur 31 et l'organe de butée 32 peut être monté déplaçable verticalement ou pivotant de façon à pouvoir permettre le positionnement du flan de tôle 2 sur le patin inférieur 11.

Les moyens 50 de support et de positionnement des flans de tôle 3 et 4 sont formés par une série de patins inférieurs 51 indépendants et juxtaposés de façon à former une surface de contact sensiblement continu avec la face inférieure des flans de tôle 2 et 3.

Ces patins inférieurs 51 s'étendent parallèlement au plan de joint des flans de tôle 2 et 3.

D'autre part, les patins inférieurs 51 sont montés chacun déplaçable sur une table support 52, selon une direction perpendiculaire au plan de joint des flans de tôle 2, 3 et 4.

Chaque patin inférieur 51 comporte deux pions 53 en saillie par rapport à sa surface inférieure. Chaque pion 53 pénètre dans une lumière 54 ménagée dans la table support 52 de façon à assurer le guidage du patin inférieur 51 correspondant lors de son déplacement transversal par rapport au plan de joint des flans de tôle 2, 3 et 4.

Les moyens 60 de maintien des bords à souder 3a et 4a des flans de tôle 3 et 4 contre le bord à souder 2a du flan de tôle 2 sont formés par une série de patins supérieurs 61 indépendants et juxtaposés de façon à former une surface de contact sensiblement continu avec la face supérieure des flans de tôle 3 et 4.

Ces patins supérieurs 61 s'étendent parallèlement au plan de joint des flans de tôle 2, 3 et 4 et sont disposés chacun en regard d'un patin inférieur 51.

Chaque patin supérieur 61 est déplaçable, d'une part, verticalement et, d'autre part, perpendiculairement au plan de joint des flans de tôle 2, 3 et 4.

Les moyens 70 de serrage à pression sectorisée des flans de tôle 3 et 4 sont formés par au moins un vérin 71 associé à chaque patin supérieur 61.

Chaque vérin 71 est destiné à exercer sur un patin supérieur 61 correspondant, une pression verticale déterminée de façon à serrer les flans de tôle 3 et 4 entre les patins supérieurs 61 et les patins inférieurs 51.

Chaque vérin 71 comporte un corps 71a supporté par une poutre 72 s'étendant parallèlement à la série de patins supérieurs 61 et une tige 71b déplaçable verticalement et reliée au patin supérieur 61 correspondant par un organe de liaison formé par une béquille 73 en forme de "V".

Cette béquille 73 comporte une première extrémité 73a montée articulée sur l'extrémité libre de la tige 71b du vérin correspondant 71 par l'intermédiaire d'un trou oblong 74 ménagé dans ladite béquille et une seconde extrémité 73b montée pivotante sur la poutre 72 supportant le vérin 71 correspondant.

La béquille 73 comporte également un axe d'articulation 75 situé entre les extrémités 73a et 73b de la béquille 73 et muni d'un galet 76 disposé dans une lumière 77 ménagée dans une chape 78 solidaire du patin supérieur 61 correspondant.

La distance séparant la première extrémité 73a de la béquille 73 et l'axe d'articulation 75 est supérieure à la distance séparant la seconde extrémité 73b de ladite béquille 73 avec ledit axe d'articulation 75 de façon à augmenter la pression exercée sur le patin supérieur 61 par le vérin 71 correspondant au moment du serrage des flans de tôle 3 et 4.

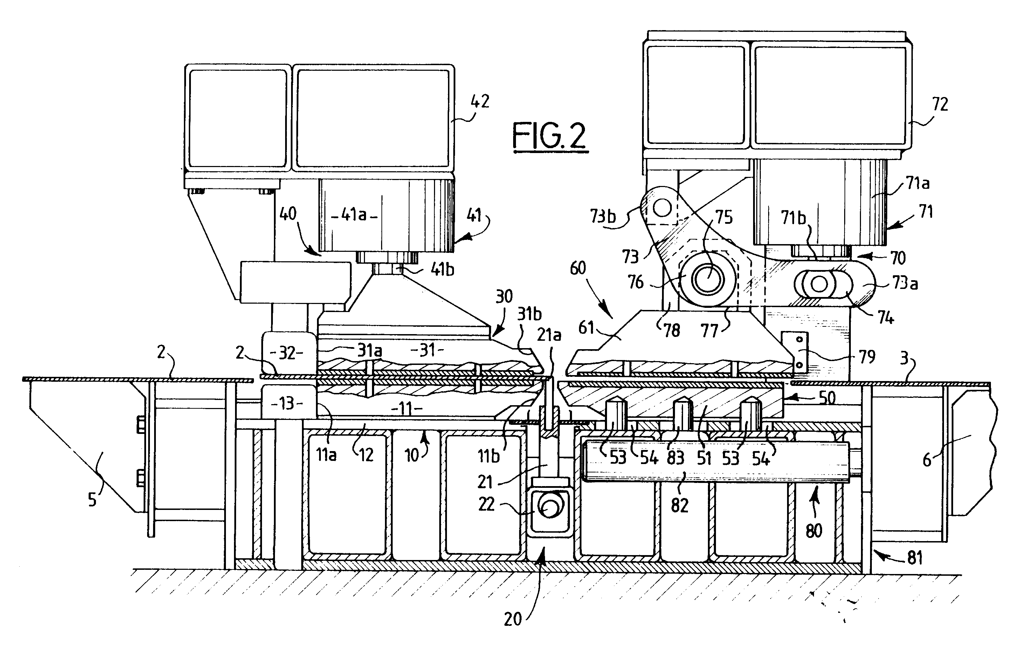

Comme représenté à la Fig. 2, chaque patin 61 est en position relevée, en appui sur une butée 79 de façon à le maintenir horizontal.

L'ensemble constitué par la poutre 72, les vérins 71, les béquilles 73, les patins supérieurs 61 et les butées 79 peut être relevé ou monté pivotant de façon à soulever les patins supérieurs 61 pour pouvoir positionner les flans de tôle 3 et 4 sur les patins inférieurs 51.

Le point de fixation de la chape 78 sur chaque patin supérieur 61 est légèrement décalé vers l'arrière dudit patin supérieur 61 pour qu'au moment de leur descente, les patins supérieurs 61 soient inclinés en direction du plan de joint des flans de tôle 2, 3 et 4 et viennent s'appliquer progressivement sur les flans de tôle 3 et 4.

Les moyens 80 de mise en pression latérale et sectorisée des bords à souder 2a, 3a et 4a des flans de tôles 2, 3 et 4 sont formés par au moins un vérin 81 associé à chaque patin inférieur 51.

Chaque vérin 81 est destiné à exercer sur chaque patin inférieur 51 correspondant, une pression déterminée et dirigée selon une direction perpendiculaire au plan de joint des flans de tôle 2, 3 et 4.

Chaque vérin 81 comporte une tige 82 déplaçable horizontalement et reliée au patin inférieur 51 correspondant par au moins un pion 83 qui traverse la table support 52.

L'installation selon l'invention fonctionne de la manière suivante.

Tout d'abord, l'opérateur relève le patin supérieur 31 ainsi que les patins supérieurs 61, la butée 21 étant en position relevée, comme à la Fig. 2.

L'opérateur positionne le flan de tôle 2 sur le patin inférieur 11 de telle manière que le bord à souder 2a de ce flan de tôle 2 vienne s'appliquer sur la butée 21 pour que ledit bord à souder soit dans l'axe du faisceau laser 1.

Ensuite, l'opérateur commande la descente du patin supérieur 31 et la mise en pression des vérins 41 qui agissent sur le patin supérieur 31 de façon à serrer le flan de tôle 2 entre ce patin supérieur 31 et le patin inférieur 11 et à maintenir le bord à souder 2a dudit flan de tôle 2 dans l'axe du faisceau laser 1.

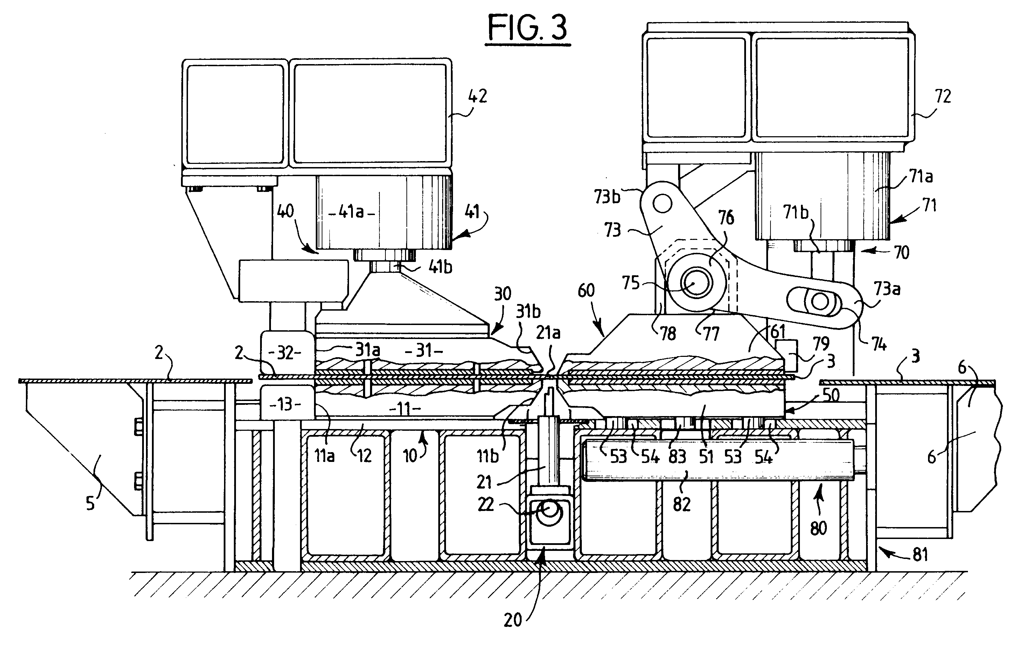

La butée 21 est ensuite escamotée comme représentée à la Fig. 3 et l'opérateur positionne les flans de tôle 3 et 4 sur les patins inférieurs 51 pour que les bords à souder 3a et 4a de ces flans de tôle s'appliquent et sur le bord à souder 2a du flan de tôle 2.

Après le positionnement des flans de tôle 3 et 4, l'opérateur commande la descente des patins supérieurs 61 et la mise en pression des vérins 71.

La descente de la tige 71b de chaque vérin 71 provoque le basculement de la béquille 73 autour de son extrémité opposée 73b pour que le galet 76 vienne s'appliquer sur la face supérieure du patin supérieur 61 correspondant.

Ainsi, chaque galet 76 exerce sous l'action d'un vérin 71 et d'une béquille 73, une pression sur un patin supérieur 61 de façon à serrer les flans de tôle 3 et 4 entre les patins 51 et 61 et à maintenir les bords à souder 3a et 4b desdits flans de tôle 3 et 4 contre le bord à souder 2a du flan de tôle 2, c'est à dire dans l'axe du faisceau laser 1.

La béquille 73 permet par effet de levier d'amplifier l'effort exercé sur les flans de tôle 3 et 4 par l'intermédiaire des patins supérieurs 61. Cette configuration permet d'engendrer un effort de pression ayant une composante verticale et une composante tangentielle née de l'adhérence et de l'effort vertical, permettant une mise en pression latérale des flans de tôle 2, 3 et 4 à rabouter.

La pression de serrage exercée par chaque patin 61 sur les flans de tôle 3 et 4 est réglable et peut être déterminée en fonction des caractéristiques et/ou de l'épaisseur des flans de tôle 3 et 4.

Pour assurer un minimum de jeu entre les bords à souder 2a, 3a et 4a des flans de tôle 2, 3 et 4, l'opérateur commande la mise en pression des vérins 81.

La tige 82 de chaque vérin 81 agit, par l'intermédiaire du pion 83, sur le patin inférieur 51 correspondant qui se déplace perpendiculairement au plan de joint des flans de tôle 2, 3 et 4 et exerce sur les bords à souder 2a, 3a et 4a une pression latérale.

Le déplacement latéral du patin inférieur 11 et du patin supérieur 31 est empêché par les galets, respectivement 13 et 32.

La pression latérale exercée par chaque vérin 80 est réglable et peut être déterminée en fonction des caractéristiques et/ou de l'épaisseur des flans de tôle 2, 3 et 4 de façon à éviter un flambement de ceux-ci et un recouvrement au niveau du plan de joint.

Ensuite, l'opérateur commande le déplacement de l'ensemble de soudage de telle manière que le faisceau laser 1 se déplace au dessus du plan de joint des flans de tôle 2, 3 et 4 et assure le soudage des bords 2a, 3a et 4a desdits flans de tôle.

Les avantages de l'installation selon la présente invention sont multiples.

En effet, l'installation selon l'invention permet d'éviter la dégradation des surfaces des flans de tôle grâce à la multiplication des surfaces de contact entre les organes de serrage et lesdits flans de tôle et de réduire les difficultés d'accostage entre ces flans de tôle.

Par ailleurs, l'installation selon l'invention permet d'appliquer des efforts variables sur les flans de tôle au moyen de vérins indépendants.

Enfin, l'installation selon l'invention permet de rattraper des jeux localement trop importants et de réaliser une soudure de qualité parfaite même dans le cas du soudage de plus de deux flans de tôle d'épaisseur différente.

## Revendications

1. Installation de positionnement bord à bord et de soudage au moyen d'un faisceau laser (1) d'au moins deux flans de tôle (2, 3, 4), comprenant:
- des moyens (10) de support et de positionnement d'un premier flan de tôle (2) selon un plan de référence horizontal,
- des moyens (20) de positionnement du bord à souder (2a) dudit premier flan de tôle (2) dans l'axe du faisceau laser (1),
- des moyens (30) de maintien du bord à souder (2a) du premier flan de tôle (2) dans l'axe du faisceau laser (1),
- des moyens (40) de serrage du premier flan de tôle (2),
- des moyens (50) de support et de positionnement d'au moins un second flan de tôle (3, 4) selon ledit plan de référence horizontal,
- des moyens (60) de maintien du bord à souder (3a, 4a) dudit second flan de tôle (3, 4) contre le bord à souder (2a) dudit premier flan de tôle (2),
- des moyens (70) de serrage dudit second flan de tôle (3, 4),
- des moyens (80) de mise en pression latérale des bords à souder (2a, 3a, 4a) desdits flans de tôle (2,3, 4),
- et un ensemble de soudage par faisceau laser (1) déplaçable selon le plan de joint desdits flans de tôle (2, 3, 4) à souder,
caractérisée en ce que
- les moyens (70) de serrage dudit second flan de tôle (3, 4) et les moyens (80) de mise en pression latérale des bords à souder (2a, 3a, 4a) desdits flans de tôle (2, 3, 4) sont à pression sectorisée.

2. Installation selon la revendication 1, caractérisée en ce que les moyens (10) de support et de positionnement du premier flan de tôle (2) sont formés par au moins un patin inférieur (11) fixe, en appui sur une table support (12) et s'étendant parallèlement au plan de joint desdits flans de tôle (2, 3, 4), ledit patin inférieur (11) formant une surface de contact continu avec la face inférieure dudit premier flan de tôle (2).

3. Installation selon la revendication 2, caractérisée en ce que le patin inférieur (11) est en appui sur sa face latérale (11a) opposée à celle (11b) en regard du plan de joint desdits flans de tôle (2, 3, 4), sur au moins un organe de butée (13) solidaire de la table support (12).

4. Installation selon les revendications 1 et 2, caractérisée en ce que les moyens (20) de positionnement du bord à souder (2a) du premier flan de tôle (2) sont formés par une butée (21) longitudinale et escamotable, disposée verticalement pour que le plan passant par sa face latérale (21a) située en regard du patin inférieur (11), soit confondue avec l'axe du faisceau laser (1).

5. Installation selon les revendications 1 et 2, caractérisée en ce que les moyens (30) de maintien du bord à souder (2a) du premier flan de tôle (2) dans l'axe du faisceau laser (1) sont formés par au moins un patin supérieur (31) déplaçable verticalement et s'étendant parallèlement au plan de joint des flans de tôle (2, 3, 4), ledit patin supérieur (31) formant une surface de contact continu avec la face supérieure dudit premier flan de tôle (2) et étant disposé en regard dudit patin inférieur (11).

6. Installation selon les revendications 1 et 5, caractérisée en ce que les moyens (40) de serrage du premier flan de tôle (2) sont formés par au moins un vérin (41) destiné à exercer sur le patin supérieur (31) une pression verticale pour serrer ledit premier flan de tôle (2) entre ce patin supérieur (31) et le patin inférieur (11).

7. Installation selon la revendication 6, caractérisée en ce que ledit vérin (41) comporte un corps (41a) supporté par une poutre (42) s'étendant parallèlement au patin supérieur (31) et une tige (41b) déplaçable verticalement et solidaire dudit patin supérieur (21).

8. Installation selon les revendications 5 et 7, caractérisée en ce que le patin supérieur (31) est en appui par sa face latérale (31a) opposée à celle (31b) en regard du plan de joint desdits flans de tôle (2, 3, 4), sur au moins un organe de butée (32) solidaire de ladite poutre (42).

9. Installation selon la revendication 1, caractérisée en ce que les moyens (50) de support et de positionnement dudit second flan de tôle (3, 4) sont formés par une série de patins inférieurs (51) indépendants, juxtaposés et s'étendant parallèlement au plan de joint dudit flan de tôle (3, 4), lesdits patins inférieurs (51) formant une surface de contact sensiblement continu avec la face intérieure dudit second flan de tôle (3, 4) et étant montés chacun déplaçable sur une table support (52), perpendiculairement au plan de joint desdits flans de tôle (2, 3, 4).

10. Installation selon les revendications 1 et 9, caractérisée en ce que les moyens (60) de maintien du bord à souder (3a, 4a) dudit second flan de tôle (3, 4) contre le bord à souder (2a) dudit premier flan de tôle (2) sont formés par une série de patins supérieurs (61) indépendants, juxtaposés et s'étendant parallèlement au plan de joint desdits flans de tôle (2, 3, 4), lesdits patins supérieurs (61) formant une surface de contact sensiblement continu avec la face supérieure dudit second flan de tôle (3, 4) et étant disposés chacun en regard d'un patin inférieur (51).

11. Installation selon la revendication 10, caractérisée en ce que chaque patin supérieur (61) est déplaçable, d'une part, verticalement et, d'autre part, perpendiculairement au plan de joint desdits flans de tôle (2, 3, 4).

12. Installation selon l'une des revendication 1, 10 et 11, caractérisée en ce que les moyens (70) de serrage à pression sectorisée dudit second flan de tôle (3, 4) sont formés par au moins un vérin (71) associé à chaque patin supérieur (61) et destiné à exercer sur ledit patin supérieur (61) une pression verticale pour serrer ledit second flan de tôle (3, 4) entre ce patin supérieur (61) et le patin inférieur (51) correspondant.

13. Installation selon la revendication 12, caractérisée en ce que ledit vérin (71) comporte un corps (71a) supporté par une poutre (72) s'étendant parallèlement à la série de patins supérieurs (61) et une tige (71b) déplaçable verticalement et reliée au patin supérieur (61) correspondant.

14. Installation selon les revendications 12 et 13, caractérisée en ce que la tige (71b) dudit vérin (71) est reliée audit patin supérieur (61) correspondant par un organe de liaison (73) permettant d'augmenter la pression exercée par ledit vérin (71).

15. Installation selon l'une des revendications 12 à 13, caractérisée en ce que l'organe de liaison est formé par une béquille (73) en forme de "V" comportant une première extrémité (73a) montée articulée sur l'extrémité libre de la tige (71b) par l'intermédiaire d'un trou oblong (74) ménagé dans ladite béquille (73), une seconde extrémité (73b) montée pivotante sur la poutre (72) supportant ledit vérin (71) et un axe d'articulation (75) situé entre lesdites extrémités (73a, 73b) et muni d'un galet (76) disposé dans une lumière (77) ménagée dans une chape (78) solidaire dudit patin supérieur (61) correspondant.

16. Installation selon la revendication 15, caractérisée en ce que la distance séparant la première extrémité (73a) de la béquille (73) et l'axe d'articulation (74) est supérieure à la distance séparant la seconde extrémité (73b) de ladite béquille (73) avec ledit axe d'articulation (75).

17. Installation selon les revendications 1 et 10, caractérisée en ce que les moyens (80) de mise en pression latérale et sectorisée des bords à souder (2a, 3a, 4a) desdits flans de tôle (2, 3, 4) sont formés par au moins un vérin (81) associé à chaque patin inférieur (51) et destiné à exercer sur ledit patin inférieur (51) une pression dirigée selon une direction perpendiculaire au plan de joint desdits flans de tôles (2, 3, 4).

18. Installation selon la revendication 17, caractérisée en ce que ledit vérin (81) comporte une tige (82) déplaçable horizontalement et reliée audit patin inférieur (51) correspondant par au moins un pion (83).

## Claims

1. An apparatus for the edge-to-edge positioning and welding by means of a laser beam (1) of at least two sheet metal plates (2, 3, 4) comprising :
- means (10) for supporting and positioning a sheet metal plate (2) along a horizontal reference plane,
- means (20) for positioning the edge (2a) to be welded of the said first sheet metal plate (2) in the axis of the laser beam (1),
- means (30) for holding the edge to be welded (2a) of the first sheet metal plate (2) in the axis of the laser beam (1),
- means (40) for tightening the first sheet metal plate (2),
- means (50) for supporting and positioning at least one second sheet metal plate (3, 4) along the said horizontal reference plane,
- means (60) for holding the edge to be welded (3a, 4a) of the said second sheet metal plate (3, 4) against the edge to be welded (2a) of the said first sheet metal plate (2),
- means (70) for tightening the said second sheet metal plate (3, 4),
- means (80) for subjecting the edges (2a, 3a, 4a) to be welded of the said sheet metal plates (2, 3, 4) to lateral pressure,
- and a unit for welding by means of the laser beam (1), displaceable along the joint plane of the said sheet metal plates (2, 3, 4) to be welded, characterized in that
- the means (70) for tightening the said second sheet metal plate (3, 4) and the means (80) for subjecting the edges (2a, 3a, 4a) to be welded of the said sheet metal plates (2, 3, 4) to lateral pressure are sectored pressure means.

2. An apparatus according to claim 1, characterized in that the means (10) for supporting and positioning the first sheet metal plate (2) are formed by at least one fixed lower base block (11) resting on a supporting table (12) and extending parallel to the joint plane of the said sheet metal plates (2, 3, 4), the said lower base block (11) forming a surface of continuous contact with the bottom side of the said first sheet metal plate (2).

3. An apparatus according to claim 2, characterized in that the lower base block (11) bears on its lateral face (11a) on the opposite side to that (11b) facing the joint plane of the said sheet metal plates (2, 3, 4) on at least one stop means (13) joined to the supporting table (12).

4. An apparatus according to claims 1 and 2, characterized in that the means (20) for positioning the edge (2a) to be welded of the first sheet metal plate (2) are formed by a longitudinal and retractable stop (21) disposed vertically, so that the plane passing through its side face (21a) situated opposite the lower base block (11) should be identical with the axis of the laser beam (1).

5. An apparatus according to claims 1 and 2, characterized in that the means (30) for holding the edge to be welded (2a) of the first sheet metal plate (2) in the axis of the laser beam (1) are formed by at least one upper block (31), vertically displaceable and extending parallel to the joint plane of the sheet metal plates (2, 3, 4), the said upper block (31) forming a surface of continuous contact with the upper side of the said first sheet metal plate (2) and being disposed opposite the said lower base block (11).

6. An apparatus according to claims 1 and 5, characterized in that the means (40) for tightening the first sheet metal plate (2) are formed by at least one jack (41) intended to exert vertical pressure on the upper block (31) so as to tighten the said first sheet metal plate (2) between this upper block (31) and the lower base block (11).

7. An apparatus according to claim 6, characterized in that the said jack (41) has a body (41a) supported by a girder (42) extending parallel to the upper block (31) and a rod (41b) vertically displaceable and joined to the said upper block (31).

8. An apparatus according to claims 5 and 7, characterized in that the upper block (31) bears with its side face (31a) on the opposite side to that (31b) facing the joint plane of the said sheet metal plates (2, 3, 4) on at least one stop means (32) joined to the said girder (42).

9. An apparatus according to claim 1, characterized in that the means (50) for supporting and positioning the said second sheet metal plate (3, 4) are formed by a series of independent lower base blocks, juxtaposed and extending parallel to the joint plane of the said sheet metal plate (3, 4), the said lower base blocks (51) forming a surface of a substantially continuous contact with the bottom side of the said second sheet metal plate (3, 4), and being each mounted for displacement on a supporting table (52) perpendicularly to the joint plane of the said sheet metal plates (2, 3, 4).

10. An apparatus according to claims 1 and 9, characterized in that the means (60) for holding the edge (3a, 4a) to be welded of the said second sheet metal plate (3, 4) against the edge to be welded (2a) of the said first sheet metal plate (2) are formed by a series of independent upper blocks (61), juxtaposed and extending parallel to the joint plane of the said sheet metal plates (2, 3, 4), the said upper blocks (61) forming a surface of a substantially continuous contact with the upper side of the said second sheet metal plate (3, 4) and being each disposed opposite a lower base block (51).

11. An apparatus according to claim 10, characterized in that each upper block (61) is displaceable, on the one hand, vertically and on the other hand, perpendicularly to the joint plane of the said sheet metal plates (2, 3, 4).

12. An apparatus according to one of claims 1, 10 and 11, characterized in that the means (70) for tightening the said second sheet metal plate (3, 4) by means of sectored pressure are formed by at least one jack (71) associated with each upper block (61) and intended to exert vertical pressure on the said upper block (61) to tighten the said second sheet metal plate (3, 4) between this upper block (61) and the corresponding lower base block (51).

13. An apparatus according to claim 12, characterized in that the said jack (71) has a body (71a) supported by a girder (72) extending parallel to the series of upper blocks (61) and a rod (71b) vertically displaceable and joined to the corresponding upper block (61).

14. An apparatus according to claims 12 and 13, characterized in that the rod (71b) of the said jack (71) is connected to the said corresponding upper block (61) by a linkage element (73) making it possible to increase the pressure exerted on the said jack (71).

15. An apparatus according to one of claims 12 to 13, characterized in that the linkage element is formed by a V-shaped lever (73) having a first end (73a) mounted in an articulated manner on the free end of the rod (71b) by means of a slot (74) arranged in the said lever (73), a second end (73b) pivotably mounted on the girder (72) supporting the said jack (71), and an articulation pin (75) situated between the said ends (73a, 73b) and provided with a roller (76) disposed in a hole (77) arranged in a cheek plate (78) joined to the said corresponding upper block (61).

16. An apparatus according to claim 15, characterized in that the distance separating the first end (73a) of the lever (73) and the articulation pin (75) is greater than the distance separating the second end (73b) of the said lever (73) from the said articulation pin (75).

17. An apparatus according to claims 1 and 10, characterized in that the means (80) for subjecting the edges (2a, 3a, 4a) to be welded of the said sheet metal plates (2, 3, 4) to lateral and sectored pressure are formed by at least one jack (81) associated with each lower base block (51) and intended to exert on the said base block (51) a pressure directed along a direction perpendicular to the joint plane of the said sheet metal plates (2, 3, 4).

18. An apparatus according to claim 17, characterized in that the said jack (81) has a rod (82) horizontally displaceable and connected to the said corresponding lower base block (51) by at least one pin (83).

## Patentansprüche

1. Bearbeitungsstation mit Stumpfpositionierung und Laserstrahlschweißen (1) von mindestens zwei Blechplatten (2, 3, 4), umfassend:
- Mittel (10) zum Stützen und Positionieren einer ersten Blechplatte (2) nach einer horizontalen Bezugsebene,
- Mittel (20) zum Positionieren des zu schweißenden Rands (2a) der ersten Blechplatte (2) in der Achse des Lasergtrahls (1),
- Mittel (30) zum Halten des zu schweißenden Rands (2a) der ersten Blechplatte (2) in der Achse des Laserstrahls (1),
- Mittel (40) zum Einspannen der ersten Blechplatte (2),
- Mittel (50) zum Stützen und Positionieren mindestens einer zweiten Blechplatte (3, 4) nach der horizontalen Bezugsebene,
- Mittel (60) zum Halten des zu schweißenden Rands (3a, 4a) der zweiten Blechplatte (3, 4) gegen den zu schweißenden Rand (2a) der ersten Blechplatte (2),
- Mittel (70) zum Einspannen der zweiten Blechplatte (3, 4),
- Mittel (80) zur seitlichen Druckbeaufschlagung der zu schweißenden Ränder (2a, 3a, 4a) der Blechplatten (2, 3, 4),
- und eine Schweißeinheit mit Laserstrahl (1), die entlang der Stoßfläche der zu schweißenden Blechplatten (2, 3, 4) verschiebbar ist, dadurch gekennzeichnet, daß
- die Mittel (70) zum Einspannen der zweiten Blechplatte (3, 4) und die Mittel (80) zur seitlichen Druckbeaufschlagung der zu schweißenden Ränder (2a, 3a, 4a) der Blechplatten (2, 3, 4) einen sektorisierten Druck aufweisen.

2. Bearbeitungsstation nach Anspruch 1, dadurch gekennzeichnet, daß die Mittel (10) zum Stützen und Positionieren der ersten Blechplatte (2) aus mindestens einem feststehenden unteren Tragelement (11) gebildet werden, das auf einem Auflagetisch (12) aufliegt und sich parallel zur Stoßfläche der Blechplatten (2, 3, 4) erstreckt, wobei das untere Tragelement (11) eine kontinuierliche Kontaktfläche mit der unteren Fläche der ersten Blechplatte (2) bildet.

3. Bearbeitungsstation nach Anspruch 2, dadurch gekennzeichnet, daß das untere Tragelement (11) an der seitlichen Fläche (11a), die jener (11b) neben der Stoßfläche der Blechplatten (2, 3, 4) gegenüberliegt, an mindestens ein Anschlagelement (13) anstößt, das einstückig mit dem Auflagetisch (12) ausgebildet ist.

4. Bearbeitungsstation nach Anspruch 1 und 2, dadurch gekennzeichnet, daß die Mittel (20) zum Positionieren des zu schweißenden Rands (2a) der ersten Blechplatte (2) durch einen länglichen und versenkbaren Anschlag (21) gebildet werden, der vertikal angeordnet ist, so daß die Ebene, die von seiner seitlichen Fläche (21a) durchlaufen wird, die gegenüber dem unteren Tragelement (11) angeordnet ist, mit der Achse des Laserstrahls (1) übereinstimmt.

5. Bearbeitungsstation nach Anspruch 1 und 2, dadurch gekennzeichnet, daß die Mittel (30) zum Halten des zu schweißenden Rands (2a) der ersten Blechplatte (2) in der Achse des Laserstrahls (1) aus mindestens einem oberen Tragelement (31) gebildet werden, das vertikal verschiebbar ist und sich parallel zur Stoßfläche der Blechplatten (2, 3, 4) erstreckt, wobei das obere Tragelement (31) eine kontinuierliche Kontaktfläche mit der oberen Fläche der ersten Blechplatte (2) bildet und gegenüber dem unteren Tragelement (11) angeordnet ist.

6. Bearbeitungsstation nach Anspruch 1 und 5, dadurch gekennzeichnet, daß die Mittel (40) zum Einspannen der ersten Blechplatte (2) aus mindestens einem Zylinder (41) gebildet werden, der zur Ausübung eines vertikalen Drucks auf das obere Tragelement (31) dient, um die erste Blechplatte (2) zwischen dem oberen Tragelement (31) und dem unteren Tragelement (11) einzuspannen.

7. Bearbeitungsstation nach Anspruch 6, dadurch gekennzeichnet, daß der Zylinder (41) ein Gehäuse (41a) umfaßt, das von einem Träger (42) gehalten wird, der sich parallel zum oberen Tragelement (31) erstreckt, sowie eine Stange (41b), die vertikal verschiebbar und mit dem oberen Tragelement (31) verbunden ist.

8. Bearbeitungsstation nach Anspruch 5 und 7, dadurch gekennzeichnet, daß das obere Tragelement (31) mit seiner seitlichen Fläche (31a), die jener (31b) neben der Stoßfläche der Blechplatten (2, 3, 4) gegenüberliegt, an mindestens ein Anschlagelement (32) anstößt, das mit dem Träger (42) verbunden ist.

9. Bearbeitungsstation nach Anspruch 1, dadurch gekennzeichnet, daß die Mittel (50) zum Stützen und Positionieren der zweiten Blechplatte (3, 4) aus einer Reihe von unabhängigen unteren Tragelementen (51) gebildet werden, die nebeneinander angeordnet sind und sich parallel zu der Stoßfläche der Blechplatte (3, 4) erstrecken, wobei die unteren Tragelemente (51) eine im wesentlichen kontinuierliche Kontaktfläche mit der Innenfläche der zweiten Blechplatte (3, 4) bilden und jeweils verschiebbar auf einem Auflagetisch (52) senkrecht zur Stoßfläche der Blechplatten (2, 3, 4) angeordnet sind.

10. Bearbeitungsstation nach Anspruch 1 und 9 dadurch gekennzeichnet, daß die Mittel (60) zum Halten des zu schweißenden Rands (3a, 4a) der zweiten Blechplatte (3, 4) gegen den zu schweißenden Rand (2a) der ersten Blechplatte (2) aus einer Reihe von unabhängigen oberen Tragelementen (61) gebildet werden, die nebeneinander angeordnet sind und sich parallel zu der Stoßfläche der Blechplatten (2, 3,4 ) erstrecken, wobei die oberen Tragelemente (61) eine im wesentlichen kontinuierliche Kontaktfläche mit der oberen Fläche der zweiten Blechplatte (3, 4) bilden und jeweils gegenüber einem unteren Tragelement (51) angeordnet sind.

11. Bearbeitungsstation nach Anspruch 10, dadurch gekennzeichnet, daß jedes obere Tragelement (61) einerseits vertikal und andererseits senkrecht zu der Stoßfläche der Blechplatten (2, 3, 4) verschiebbar ist.

12. Bearbeitungsstation nach einem der Ansprüche 1, 10 und 11, dadurch gekennzeichnet, daß die Mittel (70) zum Einspannen der zweiten Blechplatte (3, 4) mit sektorisiertem Druck aus mindestens einem Zylinder (71) gebildet werden, der mit jedem oberen Tragelement (61) verbunden ist und dazu dient, auf das obere Tragelement (61) einen vertikalen Druck auszuüben, um die zweite Blechplatte (3, 4) zwischen diesem oberen Tragelement (61) und dem entsprechenden unteren Tragelement (51) einzuspannen.

13. Bearbeitungsstation nach Anspruch 12, dadurch gekennzeichnet, daß der Zylinder (71) ein Gehäuse (71a) umfaßt, das von einem Träger (72) gehalten wird, der sich parallel zu der Reihe von oberen Tragelementen (61) erstreckt, sowie eine Stange (71b), die senkrecht verschiebbar und mit dem entsprechenden oberen Tragelement (61) verbunden ist.

14. Bearbeitungsstation nach Anspruch 12 und 13, dadurch gekennzeichnet, daß die Stange (71b) des Zylinders (71) mit dem entsprechenden oberen Tragelement (61) durch ein Verbindungselement (73) verbunden ist, das die Erhöhung des auf den Zylinder(71) ausgeübten Drucks ermöglicht.

15. Bearbeitungsstation nach einem der Ansprüche 12 und 13, dadurch gekennzeichnet, daß das Verbindungselement aus einer V-förmigen Gabel (73) gebildet wird, die ein erstes Ende (73a) aufweist, das an dem freien Ende der Stange (71b) über ein Langloch (74), das in der Gabel (73) ausgebildet ist, angelenkt ist, sowie ein zweites Ende (73b), das an dem Träger (72) schwenkbar befestigt ist, der den Zylinder (71) trägt, und eine Drehachse (75), die zwischen den Enden (73a, 73b) angeordnet und mit einer Rolle (76) versehen ist, die in einer Öffnung (77) angeordnet ist, welche in einem Bügel (78) ausgebildet ist, der mit dem entsprechenden oberen Tragelement (61) verbunden ist.

16. Bearbeitungsstation nach Anspruch 15, dadurch gekennzeichnet, daß der Abstand, der das erste Ende (73a) der Gabel (73) von der Drehachse (74) trennt, größer als der Abstand ist, der das zweite Ende (73b) der Gabei (73) von der Drehachse (75) trennt.

17. Bearbeitungsstation nach Anspruch 1 und 10, dadurch gekennzeichnet, daß die Mittel (80) zur seitlichen und sektorisierten Druckbeaufschlagung der zu schweißenden Ränder (2a, 3a, 4a) der Blechplatten (2, 3, 4) aus mindestens einem Zylinder (81) gebildet werden, der mit jedem unteren Tragelement (51) verbunden ist und dazu dient, auf das untere Tragelement (51) einen Druck auszuüben, der senkrecht zur Stoßfläche der Blechplatten (2, 3, 4) gerichtet ist.

18. Bearbeitungsstation nach Anspruch 17, dadurch gekennzeichnet, daß der Zylinder (81) eine horizontal verschiebbare Stange (82) aufweist, die mit dem entsprechenden unteren Tragelement (51) durch einen Zapfen (83) verbunden ist.
